# EUROPÄISCHE PATENTANMELDUNG

(11) **EP 2 826 536 A1**
(43) Veröffentlichungstag der Anmeldung: **21.01.2015**
(21) Anmeldenummer: 13176818.6
(22) Anmeldetag: 17.07.2013
(51) Int. Cl.: B01D 46/00

(54) **Detektion eines Reinigungsvorganges einer Anlage mit mindestens einem Filter**

(71) Anmelder: Siemens VAI Metals Technologies GmbH, 4031 Linz (AT)
(72) Erfinder: Hartl, Franz, 4720 Kallham (AT); Kuehas, Thomas, 4222 Luftenberg (AT); Lehofer, Martin, 4050 Traun (AT); Riese, Axel, 4020 Linz (AT); Rohrhofer, Andreas, 4020 Linz (AT); Weinzinger, Michael, 4020 Linz (AT)
(74) Vertreter: Maier, Daniel Oliver

(57) **Zusammenfassung**

Die Erfindung betrifft ein Verfahren zur Detektion eines Reinigungsvorganges einer Anlage mit mindestens einem Filter (1, 8, 9), wobei ein erstes, Feststoffpartikel (20) aufweisendes Gas (21) mit einer ersten Strömungsrichtung (10) durch den zumindest einen Filter (1, 8, 9) hindurchführbar ist und mittels des zumindest einen Filters (1, 8, 9) filterbar ist, wobei zur Reinigung des zumindest einen Filters (1, 8, 9) ein zweites Gas (22) in zur ersten Strömungsrichtung (10) umgekehrter Strömungsrichtung (11) durch den zumindest einen Filter (1, 8, 9) hindurchführbar ist. Weiterhin betrifft die Erfindung ein System zur Detektion eines Reinigungsvorganges einer Anlage mit mindestens einem Filter (1) zur Filterung eines ersten, Feststoffpartikel (20) aufweisenden Gases (21) und eine derartige Anlage. Um einen Reinigungsvorgang einer Anlage der eingangs genannten Art kostengünstig und zuverlässig detektieren zu können, wird vorgeschlagen, dass mittels zumindest eines akustischen Sensors (2, 16, 17) ein Geräusch (12) erfasst wird, welches während der Reinigung des zumindest einen Filters (1, 8, 9) entsteht, wobei der zumindest eine akustische Sensor (2, 16, 17) ein Sensorsignal erzeugt wobei das Sensorsignal an eine Recheneinheit (3) übermittelt wird, wobei das Sensorsignal mit einem in der Recheneinheit (3) hinterlegten Referenz-Sensorsignal verglichen wird.

## Beschreibung

Die Erfindung betrifft ein Verfahren zur Detektion eines Reinigungsvorganges einer Anlage mit mindestens einem Filter, wobei ein erstes, Feststoffpartikel aufweisendes Gas mit einer ersten Strömungsrichtung durch den zumindest einen Filter hindurchführbar ist und mittels des zumindest einen Filters filterbar ist, wobei zur Reinigung des zumindest einen Filters ein zweites Gas in zur ersten Strömungsrichtung umgekehrter Strömungsrichtung durch den zumindest einen Filter hindurchführbar ist. Weiterhin betrifft die Erfindung ein System zur Detektion eines Reinigungsvorganges einer Anlage mit mindestens einem Filter zur Filterung eines ersten, Feststoffpartikel aufweisenden Gases und eine derartige Anlage.

Ein derartiges Verfahren und eine derartige Vorrichtung können zum Beispiel im Umfeld der Abgasreinigung bei metallurgischen Prozessen zum Einsatz kommen. Beispielsweise sind dies LD-, Elektrolichtbogenofen-, Sinterprozesse, etc., für welche üblicherweise Trockenschlauchfilter verwendet werden. Diese Filter dienen der Staubabscheidung.

Die Abreinigung dieser Abscheidungen basiert auf dem Prinzip des Druckstoßverfahrens (englisch: "Jet-Pulse-Abreinigung"), bei welchem zyklische, intensive Druckluftstöße aus einem Druckluftspeicher ausgelöst werden. Diese Druckluftstöße versetzen den Filterschlauch kurzzeitig in Überdruck. Die Filterschläuche werden dabei aufgebläht, die Strömungsrichtung umgekehrt und der Filterkuchen abgelöst. In der Filterphase gibt ein Stützkorb dem Schlauch die entsprechende Stabilität. Nach der Abreinigung der Filterschläuche sedimentieren die Staubpartikel in den Staubsammelraum, und das Material wird von dort zumeist über Förderschnecken und Zellenradschleusen abtransportiert.

Eine solche Schlauchfilteranlage besteht typischerweise aus einer Vielzahl von Filterschläuchen, zum Beispiel mehreren Tausend Stück, deren Abreinigung sequenziell erfolgt. Derzeit erfolgt die Abgasreinigung zyklisch gesteuert. Wenn die Abreinigung eines bestimmten Filterschlauchs nicht erfolgreich durchgeführt werden kann, kommt es erst beim nächsten Reinigungszyklus, das heißt nach der Abreinigung aller anderen Filterschläuche, zu einem erneuten Abreinigungsversuch dieses Filterschlauchs. In der Zwischenzeit ist die Funktionalität dieses Filterschlauchs stark eingeschränkt. Im Extremfall kann es zu einem Ausfall der Entstaubungsanlage kommen.

Um einen möglichst hohen Wirkungsgrad der Filteranlage zu erzielen, müssen alle Filterschläuche korrekt abgereinigt werden. Somit kommt der Detektierung von Fehlfunktionen eine hohe Bedeutung zu. Aufgrund der großen Anzahl von installierten Abreinigungsventilen ist eine solche Detektierung aber nur mit hohem technischem Aufwand realisierbar. Die auf dem Markt verfügbaren Lösungen werden aufgrund hoher Kosten oder mangelnder Funktionssicherheit nur sehr eingeschränkt angenommen.

Zu den bekannten Lösungen gehört beispielsweise eine direkte Druckmessung am vorgelagerten Druckluftspeicher, der je Segment einmal installiert ist. Hierzu wird der Druckverlauf, also der Anstieg und Abfall des Druckes, ausgewertet und eine Aussage über die Funktionalität des jeweiligen Filterschlauchs durch Vergleich mit einem charakteristischen Verlauf, insbesondere einem Gutzustand, getroffen. Diese Variante verlangt je Druckluftspeicher eine separate Druckmessung inklusive einer Auswertung und verursacht folglich hohe Kosten.

Bekannt ist weiterhin eine Stromüberwachung der Abreinigungsventile, wobei diese Methode lediglich den Stromfluss im jeweiligen Ventil überwachen kann. Die Methode liefert jedoch keine Aussage über eine korrekte Abreinigung des jeweiligen Filterschlauchs, weil beispielsweise ein mechanisches Versagen oder Fehlen der Druckluft wird nicht erkannt werden kann.

Schließlich ist auch eine Messung des Druckluftdurchflusses an der Speiseleitung der Ventile bekannt. Dieses Verfahren liefert eine Aussage über das Zusammenspiel zwischen elektrischer und pneumatischer Funktion, vorausgesetzt die Sensorik verfügt über ein schnelles Ansprechverhalten, hohe Wiederholgenauigkeit und einen großen Messbereich. Auch diese Variante verlangt je Druckluftspeicher eine separate Durchflussmessung inklusive einer Auswertung und verursacht folglich hohe Kosten.

Aus dem Wikipedia-Artikel "Schlauchfilter", abgerufen am 23.04.2013, ist das oben genannte Druckstoßverfahrens zur Abreinigung bekannt.

Der Erfindung liegt die Aufgabe zugrunde, einen Reinigungsvorgang einer Anlage der eingangs genannten Art kostengünstig und zuverlässig detektieren zu können.

Diese Aufgabe wird durch Verfahren der eingangs genannten Art dadurch gelöst, mittels zumindest eines akustischen Sensors ein Geräusch erfasst wird, welches während der Reinigung des zumindest einen Filters entsteht, wobei der zumindest eine akustische Sensor ein Sensorsignal erzeugt, wobei das Sensorsignal an eine Recheneinheit übermittelt wird, wobei das Sensorsignal mit einem in der Recheneinheit hinterlegten Referenz-Sensorsignal verglichen wird.

Weiterhin wird diese Aufgabe durch ein System der oben genannten Art dadurch gelöst, dass das System zumindest einen akustischen Sensor, mittels welchem ein Geräusch erfassbar ist, welches während der Reinigung des zumindest einen Filters entsteht, und eine Recheneinheit aufweist, mittels welcher ein von dem zumindest einen akustischen Sensor erzeugbares und an die Recheneinheit übermittelbares Sensorsignal mit einem in der Recheneinheit hinterlegten Referenz-Sensorsignal vergleichbar ist.

Schließlich wird diese Aufgabe durch eine Anlage der eingangs genannten Art dadurch gelöst, dass die Anlage ein derartiges System und zumindest einen Filter aufweist, durch welchen das erste Gas hindurchführbar ist und mittels welchem das erste Gas filterbar ist, wobei zur Reinigung des zumindest einen Filters ein zweites Gas in zur ersten Strömungsrichtung umgekehrter Strömungsrichtung durch den zumindest einen Filter hindurchführbar ist.

Das erfindungsgemäße Verfahren beruht auf der akustischen Erkennung eines Geräusches, des sogenannten "Abreinigungsknalls". Dieses Geräusch kann insbesondere durch einen zur Reinigung des zumindest einen Filters abgegebenen Druckluftstoß hervorgerufen werden, beispielsweise wenn ein Druckluftventil geöffnet wird, um das zweite Gas in umgekehrter Strömungsrichtung in Bezug auf die erste Strömungsrichtung durch den zumindest einen Filter hindurchzupressen. Beim Öffnen des Ventils entsteht ein für die Reinigung des zumindest einen Filters typisches Geräusch, welches vom zumindest einen Sensor erfasst wird.

Der zumindest eine Filter, welcher beispielsweise als Schlauchfilter ausgeführt sein, bläht sich durch den Druckluftstoß auf. Durch das Aufblähen platzen die Feststoffpartikel bzw. eine Schicht von Feststoffpartikeln, welche sich während des Filterbetriebs ansammelt, vom zumindest einen Filter ab. Auch dadurch kann gegebenenfalls ein charakteristisches Geräusch entsteht, welches vom zumindest einen Sensor erfasst werden kann.

Als Sensor können insbesondere ein oder mehrere Schallwandler, wie z.B. Mikrofone, Hydrophone oder Körperschallsensoren zum Einsatz kommen, welche innerhalb der Filteranlage positioniert sind und dabei kostengünstig erhältlich sind. Oftmals sind der zumindest eine Filter in einem Gehäuse der Anlage untergebracht, wobei der zumindest eine Sensor derart angebracht ist, dass er die zu erwartenden Geräusche erfassen kann. Beispielsweise ist der zumindest eine Sensor innerhalb des Gehäuses angeordnet.

Zur Übertragung des Sensorsignals kann der zumindest eine Sensor mittels einer elektrischen Verbindung mit der Recheneinheit verbunden sein. Denkbar ist jedoch auch eine drahtlose, insbesondere optische Übertragung des Sensorsignals.

Durch den Vergleich des Sensorsignals mit dem hinterlegten Referenz-Sensorsignal kann ermittelt werden, ob der Sensor tatsächlich das typische bzw. charakteristische Geräusch erfasst hat und somit das zweite Gas tatsächlich in zur ersten Strömungsrichtung umgekehrter Strömungsrichtung durch den zumindest einen Filter hindurchströmt bzw. hindurch gepresst wird. Der Vergleich erlaubt somit, eine erfolgreiche Reinigung des zumindest einen Filters zuverlässig zu detektieren.

Dabei kann das Referenz-Sensorsignal ein vorgebbarer Schwellwert, insbesondere Bezug auf die Lautstärke, oder ein vorgebbares akustisches Spektrum sein, welches typisch für einen erfolgreichen Reinigungsvorgang ist. Dabei wird unter einem akustischen Spektrum die spektrale Verteilung eines Geräusches verstanden, das heißt der Zusammenhang zwischen Frequenz und Amplitude der akustischen Schwingungen eines Geräusches.

Weiterhin kann das Sensorsignal über einen oder mehrere Verstärker zu einem Analog/Digital (A/D)-Wandler geleitet werden. Optional wird ggf. vor der A/D-Wandlung eine Filterung mittels einer elektronischen Signalfiltereinheit vorgenommen, zum Beispiel einem Hoch-, Tief- oder Bandpassfilter, einem Maximalpegel oder dergleichen. Der A/D-Wandler kann schließlich das digitalisierte Sensorsignal der Recheneinheit bereitstellen.

Das digitalisierte akustische Sensorsignal kann durch die Recheneinheit von einem Auswertungsalgorithmus ausgewertet werden. Dieser Auswertungsalgorithmus kann z.B. auf folgenden Prinzipien beruhen:
- Vergleich des Schallpegels mit einem Referenzwert,
- Vergleich des zeitlichen Schallpegelverlaufs mit einer Referenzkurve,
- Auswertung charakteristischer Frequenzen, z.B. durch eine schnelle Fourier-Transformation (FFT) und/oder
- Auswertung des Pegel- und Frequenzverlaufs mittels Machine Learning.

In der Recheneinheit können auch mehrere Auswertungsalgorithmen einen Satz Sensordaten bewerten. Das Gesamtergebnis kann z.B. durch einen gewichteten Abstimmungsalgorithmus erfolgen. Den einzelnen Bewertungsalgorithmen sind dabei je nach Aussagekraft verschiedene Gewichtungen zugeteilt.

Als Vorteile des erfindungsgemäßen Verfahrens ergeben sich somit insbesondere eine zuverlässige Kontrolle des abgegebenen Druckluftstoßes je Druckluftventil und folglich der tatsächlichen Abreinigung des jeweiligen Filters, eine Steigerung der Reinigungsleistung des jeweiligen Filters durch eine korrekte Abreinigung sowie ein Kostenvorteil durch sehr kostengünstige Messausrüstung, wie zum Beispiel des akustischen Sensors in Form eines Mikrofons, Hydrophons oder Körperschallsensors.

Generell kann das zweite Gas dabei mit dem ersten Gas identisch sein, so dass zur Reinigung des zumindest einen Filters das erste Gas in bezüglich der Strömungsrichtung des Filterprozesses umgekehrter Strömungsrichtung durch den zumindest einen Filter gepresst wird. Dabei kann der Filter beispielsweise als Schlauchfilter ausgeführt sein.

Bei einer vorteilhaften Ausgestaltung der Erfindung gibt eine Steuereinheit zu einem vorgebbaren Zeitpunkt ein Schaltsignal an zumindest ein Ventil aus, wobei das zumindest eine Ventil durch das Schaltsignal geöffnet wird und das zweite Gas durch das zumindest eine Ventil und den zumindest einen Filter hindurchströmt, wobei die Recheneinheit jene Sensorsignale verarbeitet, welche vom zumindest einen akustischen Sensor innerhalb eines vorgebbaren, zeitlichen Fensters in Bezug auf den vorgebbaren Zeitpunkt erfasst werden.

Da der vorgebbare Zeitpunkt bekannt ist, ist insbesondere bis auf wenige Millisekunden genau bekannt, wann und innerhalb welches Zeitraums das für die Reinigung charakteristische Geräusch zu erwarten ist. Vorteilhafterweise wird zumindest dieser Zeitraum durch das vorgebbare, zeitliche Fenster abgedeckt, während dessen der zumindest eine akustische Sensor aktiv sein muss, um Geräusche zu erfassen und an die Recheneinheit zu übermitteln. Dabei ist denkbar, dass der zumindest eine akustische Sensor ohne Unterbrechung bzw. ohne bestimmte zeitliche Vorgabe betrieben wird und lediglich die Recheneinheit jene Sensorsignale berücksichtigt, welche innerhalb des vorgebbaren, zeitlichen Fensters erfasst wurden. Die Berücksichtigung jener Sensorsignale, welche innerhalb des vorgebbaren, zeitlichen Fensters ermittelt werden, erlaubt eine Reduktion von Fehlfunktionen. Insbesondere kann der Einfluss von störenden Nebengeräuschen dadurch stark reduziert werden, was die Zuverlässigkeit der Detektion der Reinigung beträchtlich erhöht.

Eine Reduktion von Fehlfunktionen kann auch dadurch erreicht werden, dass der zumindest eine Sensor insbesondere ausschließlich innerhalb des zeitlichen Fensters betrieben wird. Generell kann der zumindest eine akustische Sensor mit der Steuereinheit zur Signalübertragung elektrisch verbunden sein.

Bei einer weiteren vorteilhaften Ausgestaltung der Erfindung ist eine Schalleinhausung vorgesehen, in welcher der zumindest eine akustische Sensor angeordnet ist und in welcher zumindest ein Ventil anordenbar ist, mittels welchem das zweite Gas in zur ersten Strömungsrichtung umgekehrter Strömungsrichtung durch den zumindest einen Filter hindurchführbar ist.

Die Schalleinhausung kann beispielsweise als eine Art Kasten ausgeführt sein, welcher Störgeräusche von außerhalb unterdrückt bzw. verringert. Durch die Schalleinhausung kann die Zuverlässigkeit der Detektion der Reinigung weiter erhöht werden, weil störende Geräusche außerhalb der Schalleinhausung effektiv vom zumindest einen akustischen Sensor abgehalten werden können. Gleichzeitig wird sichergestellt, dass der zumindest eine akustische Sensor die durch das zumindest eine Ventil verursachten Geräusche besonders gut detektieren kann. Insbesondere lässt sich dadurch das Öffnen des zumindest einen Ventils zur Reinigung des zumindest einen Filters zuverlässig mittels des zumindest einen akustischen Sensor erfassen.

Insbesondere kann ein weiterer akustischer Sensor außerhalb der Schalleinhaltung vorgesehen sein, welcher somit vom zumindest einen Ventil schalltechnisch abgeschirmt ist und die Geräusche des zumindest einen Filters während des Reinigungsprozesses erfassen kann. Dieser weitere akustische Sensor kann beispielsweise innerhalb eines Gehäuses der Anlage angeordnet sein, in welchem der zumindest eine Filter untergebracht ist. Dabei kann die Schalleinhausung innerhalb oder außerhalb des Gehäuses angeordnet sein.

Bei einer weiteren vorteilhaften Ausgestaltung der Erfindung ermittelt die Recheneinheit anhand des Vergleichs des Sensorsignals mit dem Referenz-Sensorsignal einen Zustand des zumindest einen Filters und/oder des zumindest einen Ventils.

Beispielsweise kann ein solcher Zustand des zumindest einen Filters der Gestalt sein, dass der Filter geplatzt ist bzw. eine gravierende Beschädigung aufweist. Dies lässt sich dadurch feststellen, dass der Druckluftstoß nicht zu einem Aufblähen des zumindest einen Filters führt, was eine gewisse Zeit in Anspruch nimmt, sondern vergleichsweise schnell vonstattengeht. Denkbar ist auch, dass als Zustand festgestellt wird, dass der Filter durch den Druckluftstoß nicht mehr reinigbar ist, beispielsweise weil die Feststoffpartikel sich dauerhaft im zumindest einen Filter festgesetzt haben. Weiterhin kann als Zustand ermittelt werden, zu welchem Grad der Filter mit Feststoffpartikeln zugesetzt ist, womit darauf geschlossen werden kann, wann die nächste Reinigung dieses Filters erforderlich ist.

Zusätzlich oder alternativ kann der Zustand des zumindest einen Ventils erfasst werden, welches für den Reinigungsvorgang eines bestimmten Filters geöffnet werden muss. Ein derartiger Zustand kann zum Beispiel sein, dass das Ventil nicht mehr vollständig öffnet oder defekt ist, was als Referenz-Sensorsignal hinterlegt werden kann und damit wiedererkannt werden kann.

Insbesondere kann der Zustand des zumindest einen Filters bzw. des zumindest einen Ventils durch die Recheneinheit ermittelt werden, welche den Zustand des jeweiligen Filters bzw. Ventils beispielsweise auf einer vorab definierten Skala einstuft. Wie weiter oben erläutert, kann die Skala dabei zwei oder mehr Zustände umfassen.

Um derartige Zustände des zumindest einen Filters bzw. Ventils ermitteln zu können, können vorab beispielsweise derart präparierte Filter bzw. Ventil mit einem gewöhnlichen Druckluftstoß beaufschlagt werden, wobei wiederum mittels zumindest eines akustischen Sensors das dabei entstehende Geräusch erfasst wird und als für den jeweiligen Zustand charakteristisches Geräusch als Referenz-Sensorsignal hinterlegt wird.

Auf diese Referenz-Sensorsignale, welche verschiedene Zustände des zumindest einen Filters bzw. Ventils charakterisieren, kann später zugegriffen werden, um den Zustand einer zu überwachenden Anlage zu bestimmen.

Bei einer weiteren vorteilhaften Ausgestaltung der Erfindung wird das Sensorsignal und/oder gegebenenfalls der Zustand des zumindest einen Filters in einer Speichereinheit gespeichert, wobei ein Trend des Sensorsignals und/oder gegebenenfalls des Zustands des zumindest einen Filters unter Verwendung eines zeitlichen Verlaufs des Sensorsignals und/oder gegebenenfalls des Zustands des zumindest einen Filters bzw. des zumindest einen Ventils ermittelt wird.

Die Speicherung des Sensorsignals und/oder gegebenenfalls des Zustands des zumindest einen Filters bzw. des zumindest einen Ventils erlaubt, den jeweiligen zeitlichen Verlauf in der Speichereinheit abzuspeichern auch noch später auf diese Daten zugreifen zu können. Dies ist insbesondere für die Ermittlung des Trends erforderlich, welcher auf Grundlage des abgespeicherten zeitlichen Verlaufs ermittelt wird. Hierzu können gängige Methoden eingesetzt werden.

Durch die Ermittlung des Trends kann beispielsweise abgeschätzt werden, wann der jeweilige Filter bzw. das jeweilige Ventil manuell gewartet bzw. ausgetauscht werden muss. Dadurch kann insbesondere die Verfügbarkeit der Anlage erhöht werden, da ein solcher manueller Eingriff beispielsweise im Rahmen von turnusmäßig durchgeführten Wartungsarbeiten miteinbezogen werden kann. Dadurch können zusätzliche Wartungsarbeiten bzw. Stillstände der Anlage eingespart werden.

Insbesondere kann die Recheneinheit somit auch die Historie des Sensorsignals bzw. des Zustands des jeweiligen Filters bzw. Ventils speichern, um einen zeitlichen Verlauf bilden zu können. Dies kann dazu genutzt werden, den Verschleiß eines Bauteils zu erkennen und so noch vor einem Totalausfall eine Meldung zu veranlassen. Der ermittelte Zustand kann dann gemeinsam mit der eindeutigen Kennzeichnung des jeweiligen Filters bzw. Ventils sowie optional dem Zeitpunkt der Messung an ein oder mehrere Alarmsysteme übermittelt werden. Das Alarmsystem kann als Automatisierungssystem, wie zum Beispiel als Prozessvisualisierungssystem, Prozessleitsystem oder ein Condition-Monitoring-System ausgeführt sein. Optional werden auch weitere Daten, z.B. das aufgenommene Sensorsignal des jeweiligen akustischen Sensors oder eine graphische Auswertung, an das Alarmsystem übermittelt. Das Alarmsystem kann dann den Bediener bzw. Instandhalter der Anlage über die Meldung auf einem Bildschirm bzw. über eine Mensch-Maschine-Schnittstelle (human machine interface, HMI) bzw. per E-Mail, SMS oder Benachrichtigung auf einem mobilen Bediengerät, wie einem Smartphone oder Tablet Computer, informieren.

Bei einer weiteren vorteilhaften Ausgestaltung der Erfindung wird eine Meldung erzeugt, falls das Sensorsignal gleich einem vorab definierten Sensorsignal ist und/oder gegebenenfalls falls der Zustand gleich einem vorab definierten Zustand ist.

Das vorab definierte Sensorsignal und/oder gegebenenfalls der vorab definierte Zustand kann beispielsweise charakteristisch dafür sein, dass der jeweilige Filter geplatzt ist oder der jeweilige Filter bzw. das jeweilige Ventil eine gravierende Beschädigung aufweist. Dies lässt sich dadurch feststellen, dass der Druckluftstoß nicht zu einem Aufblähen des zumindest einen Filters führt, was eine gewisse Zeit in Anspruch nimmt, sondern vergleichsweise schnell vonstatten geht oder überhaupt ausbleibt. Insbesondere kann die vorab definierte Größe auch dafür charakteristisch sein, dass der Filter durch den Druckluftstoß nicht mehr reinigbar ist, beispielsweise weil die Feststoffpartikel sich dauerhaft im zumindest einen Filter festgesetzt haben. Auch ein nicht mehr funktionierendes Ventil kann somit erkannt werden.

Beispielsweise kann das vom zumindest einen akustischen Sensor erzeugte Sensorsignal eine Lautstärke des Geräusches charakterisieren, so dass die Meldung insbesondere dann erzeugt wird, wenn das Sensorsignal bzw. die Lautstärke dem vorab definierten Sensorsignal bzw. der vorab definierten Lautstärke entspricht. Insbesondere kann das vorab definierte Sensorsignal bzw. der vorab definierte Zustand auch als Referenzband bzw. "Alarmschwelle" ausgeführt sein, welche erreicht werden muss, um die Meldung zu erzeugen. Ebenso kann das vorab definierte Sensorsignal bzw. der vorab definierte Zustand umgekehrt definiert werden: das vorab definierte Sensorsignal bzw. der vorab definierte Zustand liegt dann vor, wenn der Abreinigungsknall ausbleibt oder sich anders anhört. Folglich würde für diesen Fall die Meldung erzeugt, wenn der Abreinigungsknall ausbleibt oder sich anders anhört.

Insbesondere kann das in der Recheneinheit hinterlegte Referenz-Sensorsignal als das vorab definierte Sensorsignal ausgeführt sein.

Bei einer weiteren vorteilhaften Ausgestaltung der Erfindung wird dabei die erzeugte Meldung an ein IT-System und/oder Bedienpersonal der Anlage übermittelt. Dabei kann das IT-System insbesondere als Condition-Monitoring-System bzw. das oben erläuterte Alarmsystem ausgeführt sein, welchem gegebenenfalls auch der ermittelte Zustand gemeinsam mit der eindeutigen Kennzeichnung des jeweiligen Filters bzw. Ventils sowie optional dem Zeitpunkt der Messung an ein oder mehrere Alarmsysteme übermittelt werden. Alternativ oder zusätzlich kann die Meldung auch an Wartungspersonal bzw. an für das System zuständiges Personal übermittelt werden. Durch die Übermittlung der Meldung können weitere Aktionen ausgelöst werden, wie zum Beispiel die Wartung oder das Austauschen des jeweiligen Filters.

Alternativ oder zusätzlich kann die Meldung auch dann erzeugt werden, wenn der zuvor erläuterte Trend des Sensorsignals und/oder gegebenenfalls des Zustands des zumindest einen Filters bzw. des zumindest einen Ventils innerhalb einer vorgebbaren Zeitspanne das vorab definierte Sensorsignal und/oder gegebenenfalls den vorab definierten Zustand erreicht. Dies kann beispielsweise mittels einer Interpolation auf Grundlage des ermittelten Trends vorab berechnet werden. Bei einer weiteren vorteilhaften Ausgestaltung der Erfindung weist die Anlage zumindest einen ersten Filter an einer ersten Position und einen zweiten Filter an einer zweiten Position auf, wobei die Reinigung des ersten Filters bei einem ersten Zeitpunkt und die Reinigung des zweiten Filters bei einem späteren, zweiten Zeitpunkt erfolgen, wobei die erste Position, die zweite Position, der erste Zeitpunkt und der zweite Zeitpunkt an die Recheneinheit übermittelt wird.

Dadurch, dass die Anlage zumindest einen ersten Filter und zumindest einen zweiten Filter aufweist, können großtechnische Anlagen mit einer großen Anzahl von Filtern realisiert werden, wie sie beispielsweise in der metallverarbeitenden Industrie zum Einsatz kommen. Bei derartigen Anlagen ist dabei eine zuverlässige Überprüfung bzw. Detektion des Reinigungsprozesses des jeweiligen Filters eine besondere Herausforderung, insbesondere wegen der Dimensionen der Anlage.

Durch das zeitlich versetzte Reinigen der Filter und das Erfassen des jeweiligen, entstehenden Geräusches kann zielgenau der Reinigungsprozess jedes einzelnen Filters detektiert werden. Der jeweilige Filter bzw. seine Position kann dabei genau identifiziert werden, beispielsweise da die Reihenfolge der zu reinigenden Filter vorab festgelegt wird und die Steuereinheit die entsprechenden Ventile dementsprechend zu einem vorher festgelegten Zeitpunkt ansteuert. Entsprechend können auch die beteiligten Ventile identifiziert werden.

Somit ist also bekannt, welcher Filter zu welchem Zeitpunkt gereinigt wird, wodurch die Recheneinheit die Position des Filters und die beteiligten Ventile ermitteln kann.

Bei einer weiteren vorteilhaften Ausgestaltung der Erfindung wird dabei das jeweilige während der Reinigung des jeweiligen Filters entstehende Geräusch mittels des zumindest einen akustischen Sensors erfasst, wobei die jeweilige Position des jeweiligen gereinigten Filters ermittelt wird, wobei bei dem Vergleich des jeweiligen Sensorsignals mit dem in der Recheneinheit hinterlegten Referenz-Sensorsignal die jeweilige Position des jeweiligen gereinigten Filters berücksichtigt wird.

Diese Position kann zum Beispiel auch derart in den Vergleich bzw. die Auswertung einfließen, dass die Signallaufzeiten bei der Auswertung berücksichtigt werden. Durch die Position des Filters können auch durch die Geometrie bedingte Verzerrungen, zum Beispiel der Frequenz oder der Amplitude, berücksichtigt werden.

Dies erlaubt im Ergebnis eine exaktere Lokalisierung von defekten Bauteilen, wie zum Beispiel einem Druckluftventil oder einen Filter, da durch eine an die jeweilige Position angepasste Vorverarbeitung eine höhere Trefferquote erzielbar ist.

Im Folgenden wird die Erfindung anhand der in den Figuren dargestellten Ausführungsbeispiele näher beschrieben und erläutert. Es zeigen:
- FIG 1: ein Ausführungsbeispiel des erfindungsgemäßen Systems während eines Filterprozesses,
- FIG 2: das Ausführungsbeispiel des erfindungsgemäßen Systems während eines Reinigungsprozesses,
- FIG 3: ein erstes Ausführungsbeispiel der erfindungsgemäßen Anlage, und
- FIG 4: ein zweites Ausführungsbeispiel der erfindungsgemäßen Anlage.

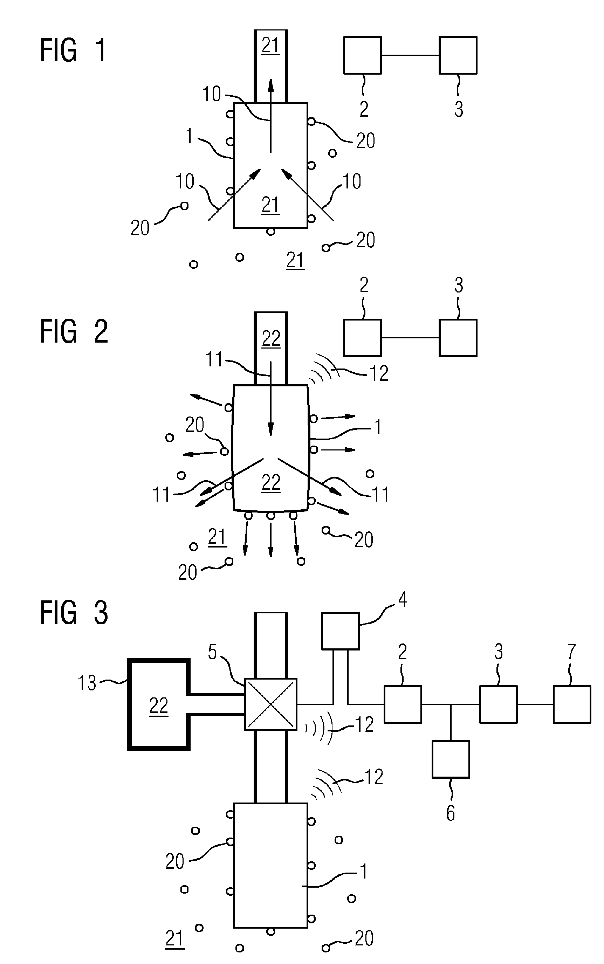

Figur 1 zeigt ein Ausführungsbeispiel des erfindungsgemäßen Systems während eines Filterprozesses. Für den Filterprozess wird ein erstes Gas 21, welches Feststoffpartikel 20 mit sich führt, mit einer ersten Strömungsrichtung 10 durch einen Filter 1 hindurch bewegt. Dabei werden die Feststoffpartikel 20 vom Filter 1 festgehalten, so dass das erste Gas 21 beim Verlassen des Filters 1 von den Feststoffpartikeln 20 gereinigt ist.

Das System weist einen akustischen Sensor 2 und eine Recheneinheit 3 auf, an welche der akustische Sensor 2 erfasste Sensorsignale übermitteln kann. Zur Übermittlung sind der akustische Sensor 2 und die Recheneinheit 3 beispielsweise über eine elektrische, drahtlose bzw. optische Verbindung miteinander verbunden.

Figur 2 zeigt das Ausführungsbeispiel des erfindungsgemäßen Systems während eines Reinigungsprozesses. Zum Reinigen des Filters 1 wird ein zweites Gas 22 in einer zweiten, zur ersten Strömungsrichtung umgekehrten Strömungsrichtung 11 in und durch den Filter 1 gepresst, wodurch die am Filter 1 haftenden Feststoffpartikel 20 vom Filter 1 abgelöst werden. Dies wird beispielsweise dadurch erreicht, dass sich der Filter 1 aufbläht und eine Schicht von Feststoffpartikeln 20 abfällt, welche sich auf der Oberfläche des Filters 1 gebildet hat.

Während dieses Reinigungsprozesses entsteht ein charakteristisches Geräusch 12, welches vom akustischen Sensor 2 erfasst wird. Das zugehörige, vom akustischen Sensor 2 erzeugte Sensorsignal wird an die Recheneinheit 3 übermittelt und dort mit einem hinterlegten Referenz-Sensorsignal verglichen. Durch den Vergleich kann der Reinigungsvorgang detektiert werden, wobei insbesondere Fehlfunktionen des Reinigungsvorgangs festgestellt werden können.

Figur 3 zeigt ein erstes Ausführungsbeispiel der erfindungsgemäßen Anlage. Die Anlage weist einen Filter 1, ein Ventil 5 und ein Gefäß 13 auf. Dabei wird der Filter 1 dazu verwendet, in einem Gas 21 befindliche Feststoffpartikel 20 zu filtern, wie schon in Figur 1 dargestellt und beschrieben. In dem Gefäß 13 befindet sich ein zweites Gas 22 unter einem höheren Druck. Empfängt das Ventil 5, welches zur Signalübertragung mit einer Steuereinheit 4 verbunden ist, ein entsprechendes Signal der Steuereinheit 4, so wird das zweite Gas 22 aus dem Gefäß 13 durch das Ventil 5 in und durch den Filter 1 gepresst. Dadurch fallen am Filter 1 haftende Feststoffpartikel 20 vom Filter 1 ab, wodurch der Filter 1 gereinigt wird.

Während des Reinigungsprozesses entsteht ein charakteristisches Geräusch 12, sei es am Ventil 5 und/oder am Filter 1, wobei das charakteristische Geräusch 12 von einem akustischen Sensor 2 erfasst wird. Das Sensorsignal kann anschließend von einer elektronischen Signalfiltereinheit 6, beispielsweise einem Bandpassfilter, gefiltert werden und wird schließlich an eine Recheneinheit 3 übermittelt. Wie in Figur 2 schon dargestellt und beschrieben wird das Sensorsignal durch die Recheneinheit 3 mit einem hinterlegten Referenz-Sensorsignal verglichen, wodurch der Reinigungsvorgang detektiert werden kann und insbesondere Fehlfunktionen des Reinigungsvorgangs festgestellt werden können. Weiterhin kann die Recheneinheit 3 einen Zustand des Filters 1 und/oder des Ventils 5 ermitteln.

Dabei können die Sensorsignale, der Zustand des Filters 1 und/oder des Ventils 5 in einer Speichereinheit 7 abgelegt werden, wodurch die Ermittlung eines Trends der jeweiligen Größe bestimmt werden kann.

Zur Übermittlung von Signalen bzw. Daten ist die Steuerung 4 sowohl mit dem Ventil 5 als auch dem akustischen Sensor 2 verbunden, wobei der akustische Sensor 2 mit der elektronischen Signalfiltereinheit 6 und der Recheneinheit 3 verbunden ist, welche schließlich mit der Speichereinheit 7 verbunden ist. Dabei kann die jeweilige Verbindung drahtgebunden oder drahtlos bzw. optisch ausgeführt sein.

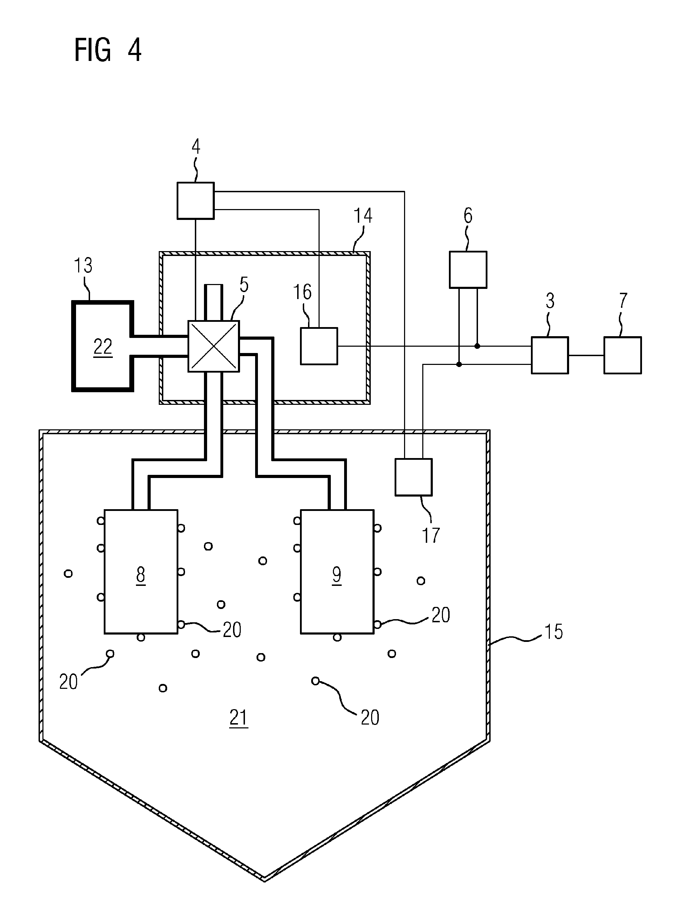

Figur 4 zeigt ein zweites Ausführungsbeispiel der erfindungsgemäßen Anlage. In Abwandlung zum ersten Ausführungsbeispiel weist das zweite Ausführungsbeispiel der erfindungsgemäßen Anlage zwei Filter 8 und 9 auf, nämlich einen ersten Filter 8 und einen zweiten Filter 9. Die beiden Filter 8 und 9 sind dem Filter 1 der übrigen Figuren in ihrer Funktion ähnlich.

Ein weiterer Unterschied besteht darin, dass das zweite Ausführungsbeispiel zwei akustische Sensoren 16 und 17 aufweist, welche wiederum dem akustischen Sensor 2 der übrigen Figuren in ihrer Funktion ähnlich sind. Dabei ist der eine akustische Sensor 16 innerhalb einer Schalleinhausung 14 angeordnet, in welcher zusätzlich das Ventil 5 untergebracht ist. Der andere akustische Sensor 17 ist innerhalb eines Gehäuses 15 angeordnet, wobei weiterhin die beiden Filter 8 und 9 innerhalb des Gehäuses 15 angeordnet sind. Dabei ist die Schalleinhausung 14 außerhalb des Gehäuses 15 angeordnet. Insbesondere kann vorgesehen sein, dass der akustische Sensor 2 außerhalb des Gehäuses 15 bzw. außerhalb der Schalleinhausung 14 angeordnet ist bzw. der als Körperschallsensor ausgeführte akustische Sensor 2 an der Schalleinhausung 14 befestigt wird.

Durch die Schalleinhausung 14 wird der akustische Sensor 16 von Geräuschen von außerhalb der Schalleinhausung 14 schalltechnisch abgeschirmt, so dass während des Reinigungsprozesses durch das Ventil 5 entstehende Geräusche besonders zuverlässig durch den akustischen Sensor 16 erfasst werden können. Der akustische Sensor 17 ist insbesondere durch die Schalleinhausung 14 vom Ventil 5 schalltechnisch isoliert. Zusätzlich ist der akustische Sensor 17 durch das Gehäuse 15 von weiteren Störgeräuschen von außerhalb des Gehäuses 15 schalltechnisch isoliert, so dass er die Geräusche des jeweiligen Filters 8 oder 9 bei seiner Reinigung zuverlässig erfassen kann.

Zusammenfassend betrifft die Erfindung ein Verfahren zur Detektion eines Reinigungsvorganges einer Anlage mit mindestens einem Filter, wobei ein erstes, Feststoffpartikel aufweisendes Gas mit einer ersten Strömungsrichtung durch den zumindest einen Filter hindurchführbar ist und mittels des zumindest einen Filters filterbar ist, wobei zur Reinigung des zumindest einen Filters ein zweites Gas in zur ersten Strömungsrichtung umgekehrter Strömungsrichtung durch den zumindest einen Filter hindurchführbar ist. Weiterhin betrifft die Erfindung ein System zur Detektion eines Reinigungsvorganges einer Anlage mit mindestens einem Filter zur Filterung eines ersten, Feststoffpartikel aufweisenden Gases und eine derartige Anlage. Um einen Reinigungsvorgang einer Anlage der eingangs genannten Art kostengünstig und zuverlässig detektieren zu können, wird vorgeschlagen, dass mittels zumindest eines akustischen Sensors ein Geräusch erfasst wird, welches während der Reinigung des zumindest einen Filters entsteht, wobei der zumindest eine akustische Sensor ein Sensorsignal erzeugt, wobei das Sensorsignal an eine Recheneinheit übermittelt wird, wobei das Sensorsignal mit einem in der Recheneinheit hinterlegten Referenz-Sensorsignal verglichen wird.

## Patentansprüche

1. Verfahren zur Detektion eines Reinigungsvorganges einer Anlage mit mindestens einem Filter (1, 8, 9),
wobei ein erstes, Feststoffpartikel (20) aufweisendes Gas (21) mit einer ersten Strömungsrichtung (10) durch den zumindest einen Filter (1, 8, 9) hindurchführbar ist und mittels des zumindest einen Filters (1, 8, 9) filterbar ist,
wobei zur Reinigung des zumindest einen Filters (1, 8, 9) ein zweites Gas (22) in zur ersten Strömungsrichtung (10) umgekehrter Strömungsrichtung (11) durch den zumindest einen Filter (1, 8, 9) hindurchführbar ist,
**dadurch gekennzeichnet, dass** mittels zumindest eines akustischen Sensors (2, 16, 17) ein Geräusch (12) erfasst wird, welches während der Reinigung des zumindest einen Filters (1, 8, 9) entsteht,
wobei der zumindest eine akustische Sensor (2, 16, 17) ein Sensorsignal erzeugt,
wobei das Sensorsignal an eine Recheneinheit (3) übermittelt wird,
wobei das Sensorsignal mit einem in der Recheneinheit (3) hinterlegten Referenz-Sensorsignal verglichen wird.

2. Verfahren nach Anspruch 1,
wobei eine Steuereinheit (4) bei einem vorgebbaren Zeitpunkt ein Schaltsignal an zumindest ein Ventil (5) ausgibt,
wobei das zumindest eine Ventil (5) durch das Schaltsignal geöffnet wird und das zweite Gas (22) durch das zumindest eine Ventil und den zumindest einen Filter (1, 8, 9) hindurchströmt,
wobei die Recheneinheit (3) jene Sensorsignale verarbeitet, welche vom zumindest einen akustischen Sensor (2, 16, 17) innerhalb eines vorgebbaren, zeitlichen Fensters in Bezug auf den vorgebbaren Zeitpunkt erfasst werden.

3. Verfahren nach einem der vorhergehenden Ansprüche,
wobei eine Schalleinhausung (14) vorgesehen ist, in welcher der zumindest eine akustische Sensor (2, 16, 17) angeordnet ist und in welcher zumindest ein Ventil (5) anordenbar ist, mittels welchem das zweite Gas (22) in zur ersten Strömungsrichtung umgekehrter Strömungsrichtung (11) durch den zumindest einen Filter (1, 8, 9) hindurchführbar ist.

4. Verfahren nach einem der vorhergehenden Ansprüche,
wobei die Recheneinheit (3) anhand des Vergleichs des Sensorsignals mit dem Referenz-Sensorsignal einen Zustand des zumindest einen Filters (1, 8, 9) und/oder des zumindest einen Ventils (5) ermittelt.

5. Verfahren nach einem der vorhergehenden Ansprüche,
wobei das Sensorsignal und/oder gegebenenfalls der Zustand des zumindest einen Filters (1, 8, 9) bzw. des zumindest einen Ventils (5) in einer Speichereinheit (7) gespeichert wird,
wobei ein Trend des Sensorsignals und/oder gegebenenfalls des Zustands des zumindest einen Filters (1, 8, 9) bzw. des zumindest einen Ventils (5) unter Verwendung eines zeitlichen Verlaufs des Sensorsignals und/oder gegebenenfalls des Zustands des zumindest einen Filters (1, 8, 9) bzw. des zumindest einen Ventils (5) ermittelt wird.

6. Verfahren nach einem der vorhergehenden Ansprüche,
wobei eine Meldung erzeugt wird, falls das Sensorsignal gleich einem vorab definierten Sensorsignal ist und/oder gegebenenfalls falls der Zustand gleich einem vorab definierten Zustand ist.

7. Verfahren nach Anspruch 6,
wobei die erzeugte Meldung an ein IT-System und/oder Bedienpersonal der Anlage übermittelt wird.

8. Verfahren nach einem der vorhergehenden Ansprüche,
wobei die Anlage zumindest einen ersten Filter (8) an einer ersten Position und einen zweiten Filter (9) an einer zweiten Position aufweist,
wobei die Reinigung des ersten Filters (8) bei einem ersten Zeitpunkt und die Reinigung des zweiten Filters (9) bei einem späteren, zweiten Zeitpunkt erfolgen,
wobei die erste Position, die zweite Position, der erste Zeitpunkt und der zweite Zeitpunkt an die Recheneinheit (3) übermittelt wird.

9. Verfahren nach Anspruch 8,
wobei das jeweilige während der Reinigung des jeweiligen Filters (1, 8, 9) entstehende Geräusch (12) mittels des zumindest einen akustischen Sensors (2, 16, 17) erfasst wird, wobei die jeweilige Position des jeweiligen gereinigten Filters (1, 8, 9) ermittelt wird,
wobei bei dem Vergleich des jeweiligen Sensorsignals mit dem in der Recheneinheit (3) hinterlegten Referenz-Sensorsignal die jeweilige Position des jeweiligen gereinigten Filters (1, 8, 9) berücksichtigt wird.

10. System zur Detektion eines Reinigungsvorganges einer Anlage mit mindestens einem Filter (1, 8, 9),
wobei ein erstes, Feststoffpartikel (20) aufweisendes Gas (21) mit einer ersten Strömungsrichtung (10) durch den zumindest einen Filter (1, 8, 9) hindurchführbar ist und mittels des zumindest einen Filters (1, 8, 9) filterbar ist,
wobei zur Reinigung des zumindest einen Filters (1, 8, 9) ein zweites Gas (22) in zur ersten Strömungsrichtung umgekehrter Strömungsrichtung (11) durch den zumindest einen Filter (1, 8, 9) hindurchführbar ist,
umfassend
- zumindest einen akustischen Sensor (2, 16, 17), mittels welchem ein Geräusch (12) erfassbar ist, welches während der Reinigung des zumindest einen Filters (1, 8, 9) entsteht,
- eine Recheneinheit (3), mittels welcher ein von dem zumindest einen akustischen Sensor (2, 16, 17) erzeugbares und an die Recheneinheit (3) übermittelbares Sensorsignal mit einem in der Recheneinheit (3) hinterlegten Referenz-Sensorsignal vergleichbar ist.

11. System nach Anspruch 10,
wobei das System eine Schalleinhausung (14) aufweist, in welcher der zumindest eine akustische Sensor (2, 16, 17) angeordnet ist und in welchem zumindest ein Ventil (5) anordenbar ist, mittels welchem das zweite Gas (22) in zur ersten Strömungsrichtung umgekehrter Strömungsrichtung (11) durch den zumindest einen Filter (1, 8, 9) hindurchführbar ist.

12. Anlage zur Filterung eines ersten, Feststoffpartikel (20) aufweisenden Gases (21) umfassend
- zumindest einen Filter (1, 8, 9), durch welchen das erste Gas (21) hindurchführbar ist und mittels welchem das erste Gas (21) filterbar ist,
wobei zur Reinigung des zumindest einen Filters (1, 8, 9) ein zweites Gas (22) in zur ersten Strömungsrichtung umgekehrter Strömungsrichtung (11) durch den zumindest einen Filter (1, 8, 9) hindurchführbar ist,
- ein System nach Anspruch 10 oder 11.

13. Anlage nach Anspruch 12 mit einem System nach Anspruch 11, wobei die Anlage zumindest ein in der Schalleinhausung (14) angeordnetes Ventil (5) aufweist, mittels welchem das zweite Gas (22) in zur ersten Strömungsrichtung umgekehrter Strömungsrichtung (11) durch den zumindest einen Filter (1, 8, 9) hindurchführbar ist.
